# EUROPEAN PATENT APPLICATION

(11) **EP 1 909 282 A1**
(43) Date of publication of application: **09.04.2008**
(21) Application number: 06781882.3
(22) Date of filing: 28.07.2006
(51) Int. Cl.: G11B 27/00, G11B 20/10, G11B 27/10, G11B 27/34, H04N 5/76, H04N 5/91

(54) **RECORDING DEVICE AND REPRODUCTION DEVICE**

(30) Priority: 28.07.2005 JP 2005218264
(71) Applicant: MATSUSHITA ELECTRIC INDUSTRIAL CO., LTD., Osaka 571-8501 (JP)
(72) Inventor: ITOH, Masanori c/o Matsushita Electric Industrial Co.,Ltd, 2-1-61, Shiromi,Chuo-ku Osaka-shi, Osaka 540-6207 (JP); SATO, Masafumi c/o Matsushita Electric Industrial Co.,Ltd., 2-1-61, Shiromi,Chuo-ku Osaka-shi, Osaka 540-6207 (JP); YAHATA, Hiroshi c/o Matsushita Electric Industrial Co.,Ltd., 2-1-61, Shiromi,Chuo-ku Osaka-shi, Osaka 540-6207 (JP)
(74) Representative: Zimmer, Franz-Josef
(86) International application number: PCT/JP2006/314972
(87) International publication number: WO 2007/013587

(57) **Abstract**

To provide an operating scheme that can save a recording apparatus generating and writing title menu data and that enables not only the recording apparatus itself but also a playback apparatus, another recording apparatus or any other external device to show a list of contents or a tile menu quickly.

A data processor includes a memory and a recording section. The memory stores a computer-readable computer program that is defined so as to make a computer perform processing of searching a storage medium for a data stream representing a content, processing of displaying, on a menu, content information about the data stream that has been found as a result of the search, and processing of making the data stream selectable by using the content information. The recording section records not only at least one data stream but also a program, which is stored in the memory, on a given storage medium.

## Description

### TECHNICAL FIELD

The present invention relates to a technique for making and showing a simple list and a detailed list of data (such as moving picture data) that is stored on a storage medium.

### BACKGROUND ART

Recently, various types of digital appliances (such as optical disc recorders and camcorders) that can write and store digital data, representing a content, on a number of types of media including an optical disc such as a DVD, a magnetic disk such as a hard disk, and a semiconductor memory, have become more and more popular. The content may be a broadcast program or the video and audio that have been captured with a camcorder, for example.

As DVD players are already used extensively, it will be convenient if optical discs, on which data has been written using any of the digital appliances described above, can be played with a DVD player. For example, if data is written on some optical disc such as a DVD-R or a DVD-RW in the DVD-Video format using the digital appliance described above and then subjected to finalize processing, the user can view and listen to the content using a DVD player.

Also, in performing the finalize processing, the digital appliance described above makes a title menu and also performs the processing of writing that menu. If a title menu is added in the DVD-Video format during the finalize processing, the content can be played back with that title menu on every DVD player. For example, Patent Document No. 1 discloses an example of writing to a DVD-R with a title menu (which is called a "DVD menu" according to that document) using a DVD recorder.
**Patent Document No. 1:** Japanese Patent Application Laid-Open Publication No. 2005-109585

### DISCLOSURE OF INVENTION

### PROBLEMS TO BE SOLVED BY THE INVENTION

In the prior art, however, the title menu is supposed to be made and written only during the finalize processing, thus causing various inconveniences.

For example, suppose a camcorder that writes data on a DVD-RW disc in the DVD-Video format. To view and listen to a moving picture, which was shot by the user, with a DVD player, every time he or she removes a disc from the camcorder, a title menu of the overall content must be made, written on the disc, and then finalize processing must be carried out using the camcorder. These processing steps need to be done whether the disc still has a space or not.

Besides, it could take as long as about 10 minutes to get the finalize processing, including the processing of making the title menu, done. In the processing of making a title menu, for example, a thumbnail picture of a moving picture stream is generated, arranged at a predetermined location on the screen for each page, and then compressed with an MPEG-2 video code into the DVD-Video format. After that, a series of processing steps, including writing file management data of a file system and filling the disc space with data of 1 GB or more, need to be carried out. The same can be said even if a DVD-R is used as the optical disc.

If another moving picture data should be added to the DVD-RW disc after the moving picture has been viewed and listened to with the DVD player, de-finalize processing should be carried out first, which is troublesome, too. In particular, whenever the moving picture data needs to be deleted, edited or subjected to any other change, the de-finalize processing should always be performed. In addition, a title menu should be made all over again for the modified moving picture.

Meanwhile, Blu-ray discs (which will be simply referred to herein as "BDs"), on which a high-definition TV program can also be stored, have already gone on public sale, and physical, file system and application formats have been being set for BD-RE and BD-ROM discs recently. To show a title menu and the contents clearly using a BD player, title menu data also needs to be generated and written on a BD, which is no different from DVDs in this respect. According to the BD-ROM standard, however, the finalize processing is not always required. Thus, there is no need to take time for the finalize processing.

An object of the present invention is to provide a content making environment in which even if a storage medium is unloaded from a recording apparatus when there is still some space left or no space left at all, the recording apparatus does not have to generate any title menu data and write it on the storage medium. Another object of the present invention is to provide a content playback environment that enables any playback apparatus to play a content with a title menu in the same way using such a storage medium. Still another object of the present invention is get a title menu shown quickly.

In other words, an object of the present invention is to provide an operating scheme that can save a recording apparatus generating title menu data and writing it all over again even if any content has been added or deleted and that enables not only the recording apparatus itself but also a playback apparatus, another recording apparatus or any other external device to show a list of contents or a tile menu quickly.

### MEANS FOR SOLVING THE PROBLEMS

A recording apparatus according to the present invention includes a memory that stores thereon a computer-readable computer program. The computer program is defined so as to make a computer perform processing of searching a storage medium for a data stream representing a content, processing of displaying, on a menu, content information about the data stream that has been found as a result of the search, and processing of making the data stream selectable by using the content information. The recording apparatus further includes a recording section for recording at least one data stream on a given storage medium. The recording section records a program, which is stored in the memory, on the given storage medium.

The program may be read by an appliance, which is loaded with the given storage medium, and may make a computer of the appliance perform the processing.

The program may make the computer of the appliance perform the processing of searching the given storage medium for the data stream.

The recording apparatus may further include an image generating section for generating a representative picture representing the at least one data stream. The recording section may write data about the representative picture as the content information on the given storage medium.

The program may make the computer of the appliance perform the processing of displaying the data about the representative picture on the menu.

The recording section may further write a management file, in which the data stream and the data about the representative picture are associated with each other, on the given storage medium.

If the at least one data stream includes a plurality of data streams, the recording section may write not only a plurality of stream files, each of which stores an associated one of the data streams, but also a single data file, which stores data about the respective representative pictures, on the given storage medium, and may further write a management file, in which respective file names of the stream files and data locations of the respective representative pictures in the single data file are associated with each other, on the given storage medium.

The recording section may write character information, identifying the at least one data stream, as the content information on the given storage medium.

The recording section may write character information, representing at least one of the content's title and recording time, on the given storage medium.

The program may make the computer of the appliance perform the processing of displaying the character information on the menu.

The recording section may record the program on the given storage medium before writing the at least one data stream.

If the at least one data stream includes a plurality of data streams, the recording section may record the program on the given storage medium before writing the last one of the data streams.

Another recording apparatus according to the present invention includes a memory that stores thereon a computer-readable computer program. The computer program is defined so as to make a computer perform processing of searching a storage medium for a data stream representing a content, processing of displaying, on a menu, content information about the data stream that has been found as a result of the search, and processing of making the data stream selectable by using the content information. The recording apparatus further includes a recording section having the ability to write data on a given storage medium. The recording section records a program, which is stored in the memory, on the given storage medium.

A playback apparatus according to the present invention plays back a content that is stored on a storage medium, on which a data stream representing the content, content information about the data stream, and a computer-readable computer program have been written. The player includes a playback section for reading the computer program, the content information and the data stream from the storage medium, and a processor with the ability to execute the computer program. By executing the computer program, the processor searches the storage medium for a data stream, displays, on a menu, the content information about the data stream that has been found as a result of the search, and accepts selection of the data stream based on the content information.

### EFFECTS OF THE INVENTION

According to the present invention, a data processor with a recording function records a computer program on a storage medium on which a data stream is stored. The computer program is defined so as to get done the processing of searching the storage medium for the data stream representing a content, the processing of displaying, on a menu, content information about the data stream that has been found, and the processing of making the data stream selectable by using the content information. As a result, there is no need to generate data about the menu of the contents on the storage medium, thus significantly shortening the time it takes to unload a disc, for example. Likewise, even if a data stream on a storage medium has been deleted, edited or modified, there is no need to perform the processing of making a title menu, either, thus achieving the same effect.

On the other hand, when loaded with such a storage medium, a data processor with a playback function executes the computer program on that storage medium, thereby searching the storage medium for a data stream representing a content, displaying, on a menu, content information (such as a representative picture or character information) about the data stream that has been found, and making the data stream selectable by reference to the content information on the menu. Since the title menu screen image is generated dynamically, there is no need to store display data representing the title menu on the storage medium. Furthermore, by using representative still pictures (e.g., thumbnail pictures that show a predetermined video frame in a smaller size) that are stored on the storage medium, the title menu screen image can be displayed quickly. If only representative still pictures, showing the latest status of the data stream, are recorded and used, a list of data streams can be shown quickly and easily.

As a result, a list of contents can be shown using those representative still pictures and the presentation rate can also be increased according to the processing rate of the program.

### BRIEF DESCRIPTION OF DRAWINGS

FIG. **1** shows various preferred embodiments of a data processor according to the present invention.
FIG. **2** illustrates a configuration for a camcorder **10** according to a preferred embodiment of the present invention.
FIG. **3** is a flowchart showing the procedure of recording processing to be done by the camcorder **10.**
FIG. **4** shows the directory structure of the optical disc **141** after the recording processing.
FIG. **5** shows the data structures of the thumbnail management file **21** and the thumbnail data file **22** shown in FIG. **4****.**
FIG. **6** is a flowchart showing the procedure of menu showing program recording processing.
FIG. **7** is a flowchart showing the procedure of title menu showing processing according to a Java program.
FIG. **8** shows an exemplary title menu screen image shown according to a Java program.
Portion **(a)** of FIG. **9** shows a title menu screen image shown by executing a Java program and portion **(b)** of FIG. **9** shows an exemplary screen image of a moving picture being played and associated with the thumbnail picture selected.

### DESCRIPTION OF REFERENCE NUMERALS

- **10**: camcorder
- **11**: recorder
- **14**: PC
- **100**: video signal input section
- **101**: video compression section
- **102**: audio signal input section
- **103**: audio compression section
- **104**: system encoding section
- **110**: video signal output section
- **111**: video expansion section
- **112**: audio signal output section
- **113**: audio expansion section
- **114**: system decoding section
- **120**: recording section
- **121**: playback section
- **160**: continuous data area detecting section
- **161**: data writing control section
- **162**: playback control section
- **163**: logical block management section
- **164**: editing control section
- **165**: program recording control section
- **166**: EEPROM
- **167**: menu showing program
- **170**: MPEG encoder
- **171**: MPEG decoder
- **172**: thumbnail picture generating section
- **173**: menu screen image generating section
- **175**: media control section
- **180**: system control section
- **181**: CPU

### BEST MODE FOR CARRYING OUT THE INVENTION

Hereinafter, preferred embodiments of a data processor according to the present invention will be described with reference to the accompanying drawings.

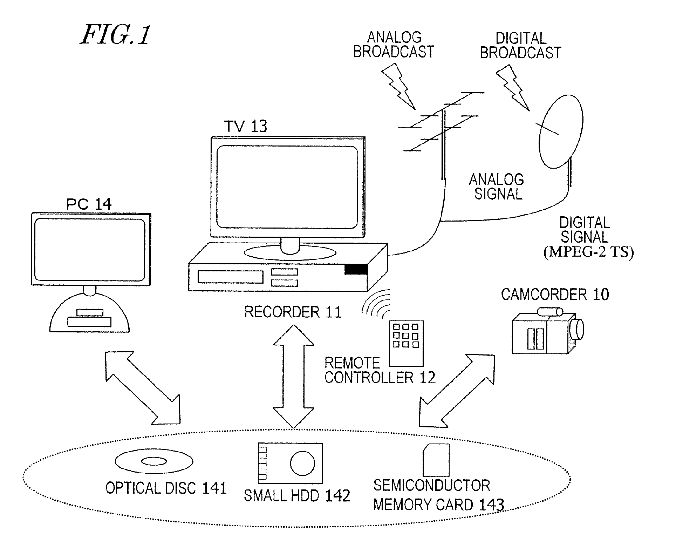

FIG. **1** shows various preferred embodiments of a data processor according to the present invention. In FIG. **1****,** a camcorder **10,** an optical disc recorder **11** (which will be simply referred to herein as a "recorder") and a PC **14** are shown as exemplary data processors.

The camcorder **10** can record a video and audio content on an optical disc **141,** which may be a BD-RE disc, for example. Alternatively, the camcorder **10** may also use a small-sized HDD **142** or a semiconductor memory card **143** as well.

The camcorder **10** can also play back a content that is stored on the optical disc **141.** The video and audio may be output from an LCD and a loudspeaker provided for the camcorder **10.**

The processing to perform the recording and playback functions of the camcorder **10** is carried out in accordance with an instruction that has been given by the user using a button (not shown) on the body.

The optical disc **141** on which the content has been recorded may be removed from the camcorder **10** and then loaded into another device to either record another content thereon or play back the recorded content.

FIG. **1** also shows the recorder **11** and the PC **14** as other devices.

The recorder **11** has not only a recording function of recording a data stream representing video and audio data of an analog or digital broadcast program on a storage medium such as the optical disc **141** but also a playback function of reading the data stream that is stored on the storage medium and playing back a content on a TV **13.** These functions are carried out in accordance with the user's instruction using a remote controller **12,** for example. The PC **14** also has the same recording and playback functions as the recorder's **11.** It should be noted that even a read-only device with only the playback function is also included in data processors according to the present invention.

In the following description of preferred embodiments, the data processor is supposed to be the camcorder **10** including an optical disc drive. However, this is just an example and the data processor may also be the recorder **11** or the PC **14.** It does not matter either whether the data processor is a fixed one or a portable one.

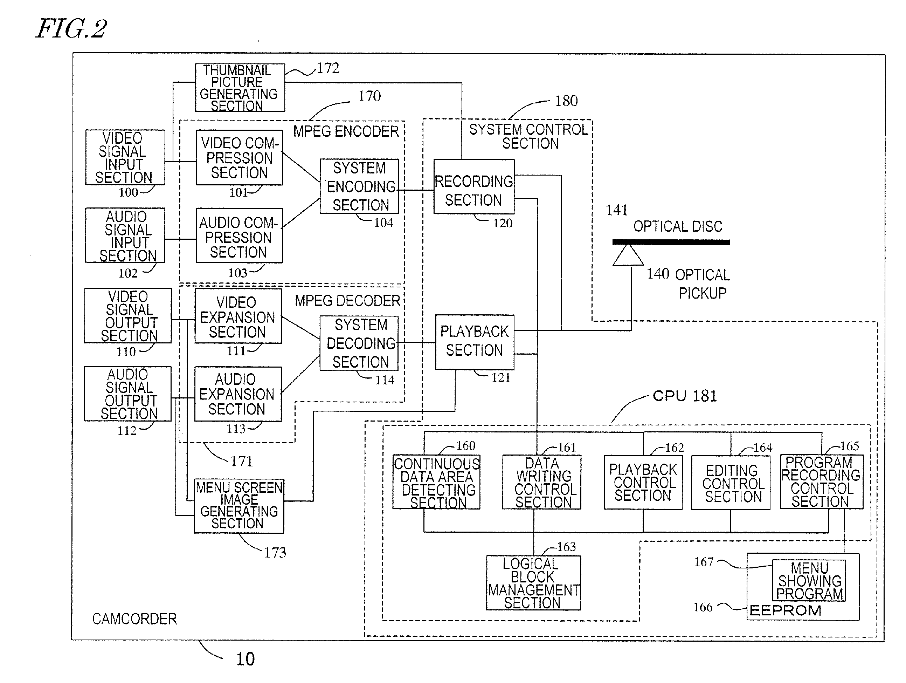

FIG. **2** illustrates a configuration for the camcorder **10** of this preferred embodiment. The recorder has the function of writing a data stream representing moving pictures with video and audio (which will be referred to herein as a "moving picture stream") on the optical disc **141** (which will be referred to herein as a "recording function"). The recorder also has the function of reading the moving picture stream from the optical disc **141** and playing back the moving pictures (which will be referred to herein as a "playback function"). And the recorder further has the function of partially deleting and editing the moving picture stream that has been written on the optical disc 141 (which will be referred to herein as an "editing function").

Hereinafter, the respective components of the camcorder 10 will be described one by one. The camcorder 10 includes a video signal input section 100, an audio signal input section 102, a video signal output section 110, an audio signal output section **112,** an MPEG encoder **170,** an MPEG decoder 171, a thumbnail picture generating section 172, a menu screen generating section 173 and a system control section 180.

An optical disc 141 is inserted in a removable state into the camcorder 10 and moving pictures can be recorded on the optical disc 141. It should be noted that the optical disc 141 is not an essential component of the camcorder 10.

First, main components for carrying out the moving picture recording function will be described.

The video signal input section 100 and the audio signal input section **102** get a video signal and an audio signal to be written. For example, the video signal input section **100** may be a CCD camera and the audio signal input section **102** may be a microphone.

The MPEG encoder **170** (which will be simply referred to herein as an "encoder **170")** includes a video compression section **101,** an audio compression section **103** and a system encoding section **104.** The video compression section **101** receives a video signal from the video signal input section **100** and compresses and encodes the signal compliant with an MPEG standard. The audio compression section **103** receives an video signal from the audio signal input section **102** and (compresses and) encodes the signal compliant with an MPEG standard. As a result, video data and audio data are output.

The system encoding section **104** interleaves the video data and the audio data with each other, thereby generating a moving picture stream. More specifically, the system encoding section **104** makes packets that store video data and packets that store audio data and arranges those packets to generate a moving picture stream. In this case, other types of data (such as character data and management information) may also be packetized and the resultant packets may also be arranged as portions of the moving picture stream. In this preferred embodiment, the moving picture stream is supposed to be a transport stream compliant with the MPEG-2 standard. The transport stream consists of fixed-length data units called "TS packets". Strictly speaking, as for BDs, this transport stream is called a "clip AV stream", which is formed by adding a fixed-length arrival time stamp to each TS packet of a transport stream.

The thumbnail picture generating section **172** (which will be simply referred to herein as the "picture generating section **172**") generates a thumbnail picture (representative still picture) of the content being recorded based on the input video signal. For example, the image generating section **172** performs JPEG compression on the image data of a predetermined video frame (which may be either the first video frame or a video frame at one second) of the input video signal, thereby generating a single thumbnail picture. The thumbnail picture will be used as a piece of information (content information) to identify its associated moving picture stream (representing a content). It should be noted that the JPEG compression is a known technique and the description thereof will be omitted herein.

The image generating section **172** is illustrated in FIG. **2** as a different component from the CPU **181** to be described later, which means that the image generating section **172** has been installed as a single independent piece of hardware. However, this is just an example and the function of the image generating section **172** may also be implemented as a software program by the CPU **181.**

The recording section **120** of the system control section **180** gets the transport stream or the image data of the thumbnail picture written on the optical disc **141** by the pickup **140** in accordance with the instruction given by the CPU **181.** The recording section **120** further receives a menu showing program **167,** which has been read out from an EEPROM **166,** from the CPU **181** and writes the program **167** on the optical disc **141.** This menu showing program **167** is executed either by the CPU **181** while the camcorder **10** is performing a playback operation or by the CPU of another device, which is loaded with the optical disc **141,** during the playback operation thereof.

In FIG. **1****,** only the menu showing program **167** is shown in the block of the EEPROM **166.** However, this is just an example. Any other program may be stored there.

Next, main components for performing moving picture playback processing will be described.

First, in accordance with the instruction given by the CPU **181,** the playback section **120** of the system control section **180** gets required data read from the optical disc **141** by the pickup **140.** Specifically, the playback section **120** reads a computer program for showing a menu from the optical disc **141,** and executes that computer program, thereby reading the image data of the thumbnail picture. Then, the playback section **120** reads a transport stream representing the content that was selected by the user.

The MPEG decoder **171** (which will be simply referred to herein as a "decoder **171")** includes a video expansion section **111,** an audio expansion section **113,** and a system decoding section **114.** The operations of these components will be described in the order of processing. Specifically, the system decoding section **114** splits the moving picture stream (i.e., a transport stream) according to the types of the packets and sends the packets including video data to the video expansion section **111** and the packets including audio data to the audio expansion section **113,** respectively. The video expansion section **111** expands the video data compliant with the MPEG standard and passes the expanded data to the video signal output section **110.** The audio expansion section **113** expands the audio data compliant with the MPEG standard, for example, and passes the expanded data to the audio signal output section **112.**

Next, the menu screen generating section **173** executes the program that has been read out by the playback section **121.** The menu screen generating section **173** may be implemented as a processor, for example, for generating a menu screen on which the image data of the thumbnail picture that has been read out from the optical disc **141** are arranged. The processing to be done by the menu screen generating section **173** will be described in detail later.

The video signal output section **110** may be a terminal for outputting the menu screen or a video signal representing the video to play to the TV **13** or a liquid crystal display screen. The audio signal output section 112 may be a loudspeaker or an audio signal output terminal, for example.

The system control section **180** includes the EEPROM **166,** the CPU **181,** and a RAM (not shown). The CPU **181** may extend a computer program on the RAM and get it executed, thereby realizing various functions. The CPU **181** may function as a continuous data area detecting section **160,** a data recording control section **161,** a playback control section **162,** a logical block management section **163,** an editing control section **164,** and a program recording control section **165,** for example. In the following description, these functions realized by the CPU **181** will be regarded as independent hardware components. The exchange of data between these components corresponds to the exchange of the data between programs.

Before starting to record a program stream, the data recording control section **161** activates and instructs the continuous data area detecting section (which will be simply referred to herein as an "area detecting section") **160** to look for an available area. By reference to a space bitmap that has been read in advance from the optical disc **140,** the area detecting section **160** searches for a continuous available area. On finding an available area as a result of the search, the data recording control section **161** starts recording the transport stream on the available area. And before the area detecting section **160** finishes writing the transport stream on the available area detected, the detecting section **160** continues searching for the next available area, thereby recording the transport stream continuously. Then, the area detecting section **160** writes the file management information of a UDF file system to finish writing a transport stream file (which is *.m2ts file, i.e., a file to store the moving picture stream).

Next, the data recording control section **161** writes not only a stream management data file (*.clpi) associated with the transport stream that has just been written but also a play list file (* .mpls) that has one to one relation with the transport stream that has just been written. The play list file includes information that designates a specific playback range in the transport stream file. In this preferred embodiment, the playback range is supposed to be from the beginning through the end of the transport stream.

The data recording control section **161** further writes a thumbnail picture representing each transport stream in a thumbnail management file (menu.tidx) and also writes a thumbnail data management file (menu.tdat). In this preferred embodiment, a single thumbnail management file and a single thumbnail data management file are supposed to be present on the optical disc **141.** Therefore, if these files are already present, they need to be updated.

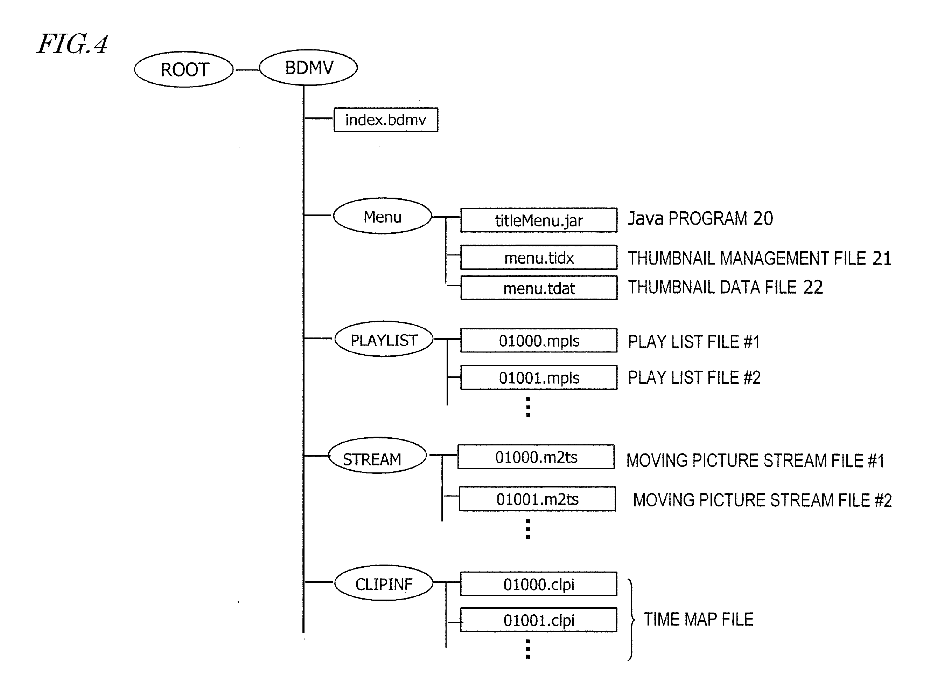

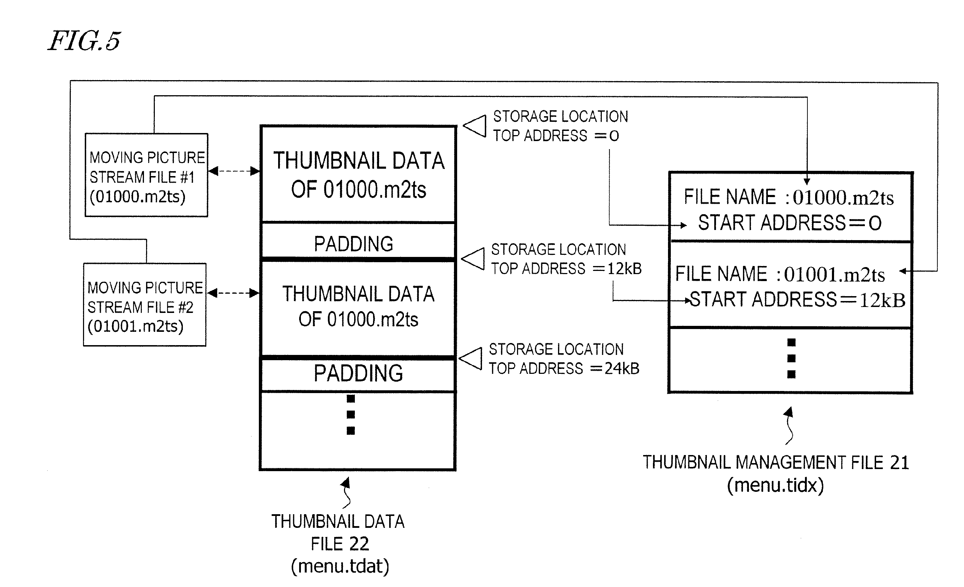

The directory structure of the optical disc **141** after those files have been recorded will be described later with reference to FIGS. **4** and **5****.**

If it is during playback and if there is no title menu on the disc, the camcorder **10** generates its own thumbnails (i.e., a menu that has been generated by the appliance itself), presents them to the user and prompts him or her to select a moving picture stream that should start being played back.

When the user selects a particular thumbnail picture to designate a content to play back, the playback control section **162** instructs that the management information of a transport stream, representing the content, be read from the management file. And by reference to the address information included in the management information, the playback control section **162** retrieves the transport stream. Then, the decoder **171** gets the transport stream thus retrieved split by the system decoding section **114** into a video signal and an audio signal, gets these signals decoded by the video expansion section **111** and the audio expansion section **113,** and then have them output to the video signal output section **110** and the audio signal output section **112,** respectively.

In performing an editing operation, the editing control section **164** accepts an instruction to delete a recorded content or an instruction to edit a portion of a recorded content from the user. In response, the editing control section **164** instructs the playback section **121** to read the portion of the data stream to be edited and the management data thereof.

When the user instructs that a recorded content be deleted, the editing control section **164** deletes its associated transport stream, stream management data file, play list file and thumbnail picture. In addition, the editing control section **164** also modifies an index file, in which the play list file to execute is stored.

On the other hand, when the user instructs that a portion of the content be deleted, the editing control section **164** locates the portion to delete from the read data and deletes that portion. Then, the editing control section **164** instructs the recording section **120** to write the non-deleted remaining data and its management data on the optical disc **141.**

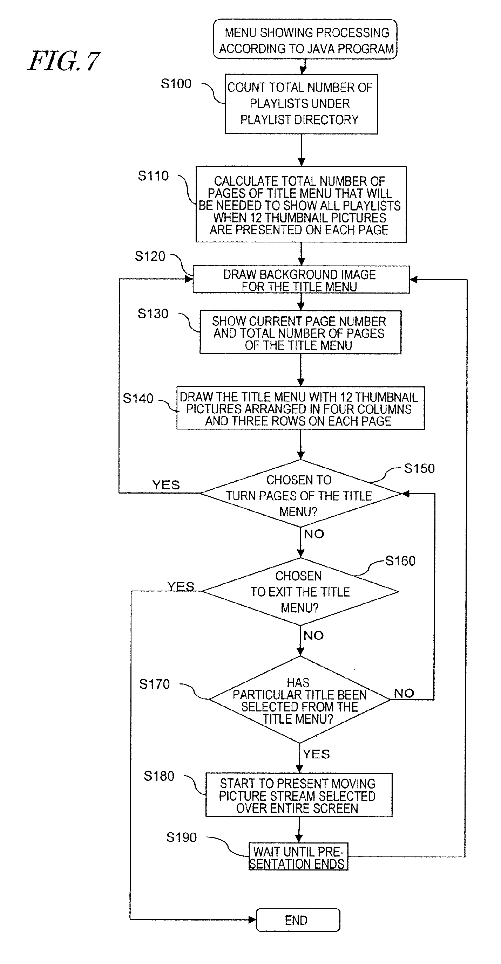

The program recording control section **165** instructs the recording section **120** to read a menu showing program **167** from the EEPROM **166** and write it on the optical disc **141** either after or before starting recording the moving picture stream on the optical disc **141.** In this preferred embodiment, the menu showing program **167** is supposed to be a Java^{™} program (the trademark credit will be omitted in the rest of the description). This Java program is a compiled code and is stored, along with a class library to refer to, as titleMenu.jar file on the optical disc **141.** The storage location of this menu showing program **167** and the contents of its processing will be described in detail later with reference to FIGS. **4** and **7****.**

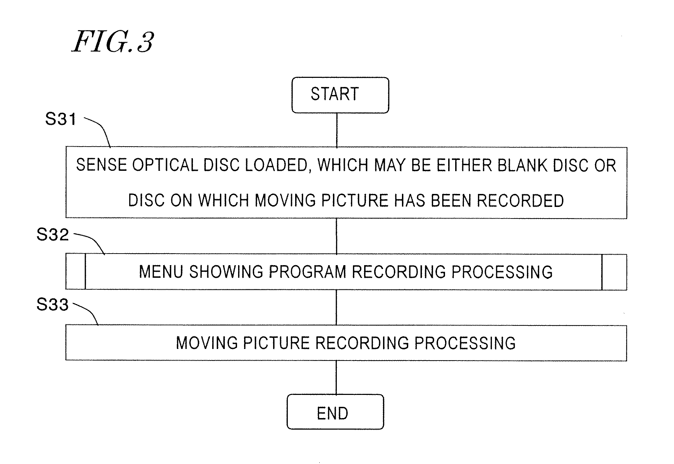

Next, the recording processing by the camcorder **10** and the post-recording directory structure of the optical disc **141** will be described with reference to FIGS. **3** through **6****.**

FIG. **3** shows the procedure of the recording processing to be performed by the camcorder **10.** First, in Step **S31,** the camcorder **10** senses that the optical disc **141** has been loaded by detecting either the insertion or ejection of the tray or a variation in optical characteristic. The optical disc **141** that can be loaded may be either a blank disc on which no data is stored or a recorded disc on which user data such as a moving picture stream has been written.

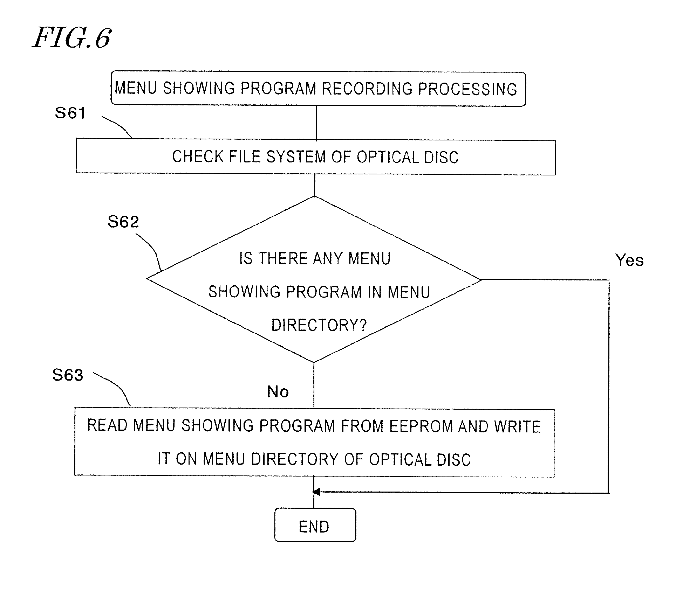

Next, in Step **S32,** the program recording control section **165** of the camcorder **10** performs the processing of recording a menu showing program and writes a menu showing program executable file on a predetermined directory of the optical disc **141.** This recording processing will be described in detail later with reference to FIG. **6****.**

Then, in Step **S33,** in response to the user's press on a recording start button, the camcorder **10** performs the processing of recording the moving picture stream.

As is clear from the processing order of these processing steps **S31** to **S33,** if a blank disc is loaded, the menu showing program is recorded first, and then the moving picture stream is recorded. In other words, before the moving picture stream is recorded, the menu showing program is recorded on the optical disc **141.** On the other hand, if an optical disc **141** on which a moving picture has already been recorded is loaded, the menu showing program is recorded on the optical disc **141** at least before the last moving picture stream is recorded as can be seen from FIG. **3****.**

FIG. **4** shows the post-recording directory structure of the optical disc **141,** which is supposed to be formatted compliant with the UDF file system. In this example, a logical block, which is not only the management unit but also the allocation unit of available areas, is supposed to be 2 KB. It should be noted that the version of the UDF file system could be any of 1.5, 2.0, 2.01, 2.5 and 2.6. Nevertheless, Version 2.6 is particularly effective because that version has a scheme (i.e., virtual write processing) that obviates the processing of writing all file management data collectively during finalizing, which has been required for conventional DVD-R discs. By combining the UDF file system with the Java program, there is no need to perform the processing of generating a title menu or the processing of writing all file management data collectively and the finalize processing no longer needs to be performed, either. Optionally, any other file system may also be used as long as the file system has a similar directory structure to that of the UDF file system.

In the optical disc **141,** defined under ROOT directory is BDMV directory, under which various files and directories are provided. Those files and directory will be described more specifically.

In the index.bdmv file, stored are the name of the Java program for generating and showing a title menu and the name of the play list file recorded.

Under the Menu directory, stored are the Java program **20** (titleMenu.jar) for generating and showing the title menu, a thumbnail management file **21** (menu.tidx) and a thumbnail data file **22** (menu.tdat).

Specifically, in the thumbnail data file **22,** a thumbnail picture is stored in JPEG code format for each moving picture stream. In the thumbnail management file **21,** stored is information defining the association between the moving picture stream and the thumbnail picture. More particularly, in the thumbnail management file 21, the file name of the moving picture stream is associated with the storage location (address) of the thumbnail picture in the thumbnail data file.

The Java program **20** draws a title menu by reference to the thumbnail pictures in the thumbnail data file **22.** And when the user selects one of the thumbnail pictures, the processing of starting to play back the moving picture stream associated with the thumbnail picture selected is carried out. When the moving picture stream has been played back, a title menu will be drawn again and a selected moving picture stream will be played back according to the description of the Java program **20.**

In the PLAYLIST directory, stored are play list files (*.mpls), each of which has one to one association with one of the moving picture streams.

In the STREAM directory, stored are moving picture stream files (*.m2ts) in a transport stream coding format.

In the CLIPINF directory, stored are management data files (*.clip) such as time maps that are associated with the moving picture streams.

FIG. **5** shows the data structures of the thumbnail management file **21** and the thumbnail data file **22** shown in FIG. **4** and also shows correlations between these files and moving picture stream files.

In the thumbnail data file **22,** the data of the thumbnail pictures (which will be referred to herein as "thumbnail data") of the respective moving picture streams are stored in the JPEG code format. On the other hand, in the thumbnail management file **21,** stored are the file names of the moving picture streams and the storage locations (i.e., addresses) of the thumbnail pictures in the thumbnail data file **22.**

Take moving picture stream file #2 (with file name 01001.m2ts) as an example. Referring to the thumbnail data file **22,** it can be seen that the thumbnail data associated with the moving picture stream file #2 is stored at an address that is 12 kB away from the beginning of the thumbnail data file **22.** Thus, it can be seen that the file name 01001.m2ts of the moving picture stream file #2 and a piece of information 12 kB, indicating the storage start address of the thumbnail data, are stored in association with each other in the thumbnail management file **21.**

Hereinafter, the processing of recording the menu showing program (the processing step **S32)** will be described in detail with reference to FIG. **6****.** This processing is carried out after it has been sensed that the optical disc has been loaded as shown in FIG. **3****.**

FIG. **6** shows the procedure of the menu showing program recording processing. First, in Step **S61,** the data recording control section **161** checks the internal configuration of the file system of the given optical disc **141.** If the given optical disc **141** is a blank disc, the data recording control section **161** determines that no UDF file system has been established yet. On the other hand, if a moving picture has been recorded on the optical disc **141,** the data recording control section **161** detects the ROOT directory or the BDMV directory shown in FIG. **4****,** thereby sensing that a UDF file system has been established.

Next, in Step **S62,** the data recording control section **161** determines whether or not there is a menu showing program within the Menu directory. If the answer is NO, the process advances to Step **S63.** On the other hand, if the answer is YES, then the process ends. This processing step **S62** is performed by determining whether or not there is a Menu directory, and if there is one, also determining whether or not there is a program file for the menu showing program in that directory.

The processing step **S63** is performed by the program recording control section **165.** Specifically, the program recording control section **165** reads the menu showing program **167** from the EEPROM **166,** sends it to the recording section **120** and instructs the recording section **120** to write it as a Java program **20** on the Menu directory of the optical disc **141.**

According to the processing shown in FIG. **6****,** the Java program **20** is always written on the Menu directory of the optical disc **141.**

If the user has designated a particular moving picture stream to delete, the moving picture stream designated and its associated thumbnail picture are deleted. On the other hand, if the user has instructed that editing should be done so as to delete a portion of a particular moving picture stream and if its associated thumbnail picture is included in the video within the specified deletion range, then another thumbnail picture is generated all over again. This processing can be done by decoding the first I-picture to appear in the remaining moving picture stream and subjecting the resultant digital picture data to JPEG compression, for example. Such a processing step may be performed by the CPU **181** by means of software.

Next, it will be described with reference to **FIG. 7** how to perform menu showing processing according to the Java program that is stored on the optical disc **141.** This menu showing processing is performed by either a CPU or a menu screen image generating section included in an appliance (i.e., player) for playing back the moving picture that is stored on the optical disc **141.** The player may be a BD-ROM player, for example. The BD-ROM player has a configuration that performs the playback function of the camcorder **10** shown in FIG. **2** and also has the ability to execute the Java program for title menu.

In the following description, the menu screen image generating section **173** of the camcorder **10** is supposed to perform the menu showing processing, which corresponds to the camcorder's **10** processing of showing a menu screen including a list of moving pictures that the camcorder **10** has recorded itself. Alternatively, if the optical disc **141** is unloaded from the camcorder **10** and then loaded into the recorder **11** or the PC **14** shown in FIG. **1****,** one of these appliances may execute the Java program. In other words, any appliance can show the menu by performing the processing steps shown in FIG. **7** as long as the appliance can be loaded with the optical disc **141,** has a computer (CPU) that can execute the Java program, and can play back a moving picture stream.

FIG. **7** shows the procedure of title menu showing processing according to the Java program. The menu screen image generating section **173** reads the titleMenu.jar file, which is stored under the Menu directory of the optical disc **141,** and starts to execute the Java program.

First, in Step **S100,** the menu screen image generating section **173** counts the number of play list files that are stored under the PLAYLIST directory of the optical disc **141.** As described above, the number of play list files has a one to one correspondence with that of moving picture streams (transport streams). That is why to count the number of play list files means counting the number of moving picture streams. Likewise, as the number of moving picture streams also has a one-to-one correspondence with that of thumbnail pictures, the number of play list files counted also tells that of thumbnail pictures.

Next, in Step **S110,** the menu screen image generating section **173** calculates the total number of pages that will be needed to show all play lists. For example, supposing twelve thumbnail pictures are presented in four columns and three rows on each page of the title menu screen image, the menu screen image generating section **173** divides the number of thumbnail pictures by 12. If there is a remainder, then the total number of pages is calculated as (quotient+1). On the other hand, if there is no remainder, the total number of pages is calculated to be equal to the quotient.

The menu screen image generating section **173** draws a background image for the title menu in the next processing step **S120,** and shows the current page number and the total number of pages of the title menu in the next processing step **S130.** And then in Step **140,** the menu screen image generating section **173** arranges 12 thumbnail pictures in four columns and three rows on each page to draw a title menu. As a result of these processing steps, the first title menu screen image is shown.

Subsequently, if the user chooses to turn pages of the title menu in Step **S150,** then the menu screen image generating section **173** performs the same series of processing steps **S120** and so on all over again by using thumbnail pictures of moving picture streams on the next page. As a result, the title menu screen image of the next page is drawn. On the other hand, if the user chooses not to turn pages of the title menu, then the process advances to Step **S160.**

If the user chooses to exit the title menu in Step **S160,** the menu screen image generating section **173** finishes executing the Java program. On the other hand, if he or she chooses not to exit the title menu, then the menu screen image generating section **173** advances to the next processing step **S170.**

If the user designates a particular title by selecting one of the thumbnail pictures in Step **S170,** the process advances to Step **S180.** Otherwise, the process goes back to the processing step **S150.**

In Step **S180,** the menu screen image generating section **173** refers to the thumbnail management file **21** shown in FIG. **5** to find the file name of the moving picture stream associated with the thumbnail picture and starts playing back that moving picture stream. In this processing step, the title menu screen image is erased and a content represented by the moving picture stream is presented on the entire screen. Then, in Step **S190,** the menu screen image generating section **173** waits for either the CPU **181** or the decoder **171** to notify it of the end of presentation, which means the end of playback. On receiving that notification, the process goes back to the processing step **120** to draw a title menu all over again.

If the optical disc **141** is unloaded from the camcorder **10** and then loaded into a player, the player can present the title menu, no matter when the user views the menu or whether or not there is a title menu file.

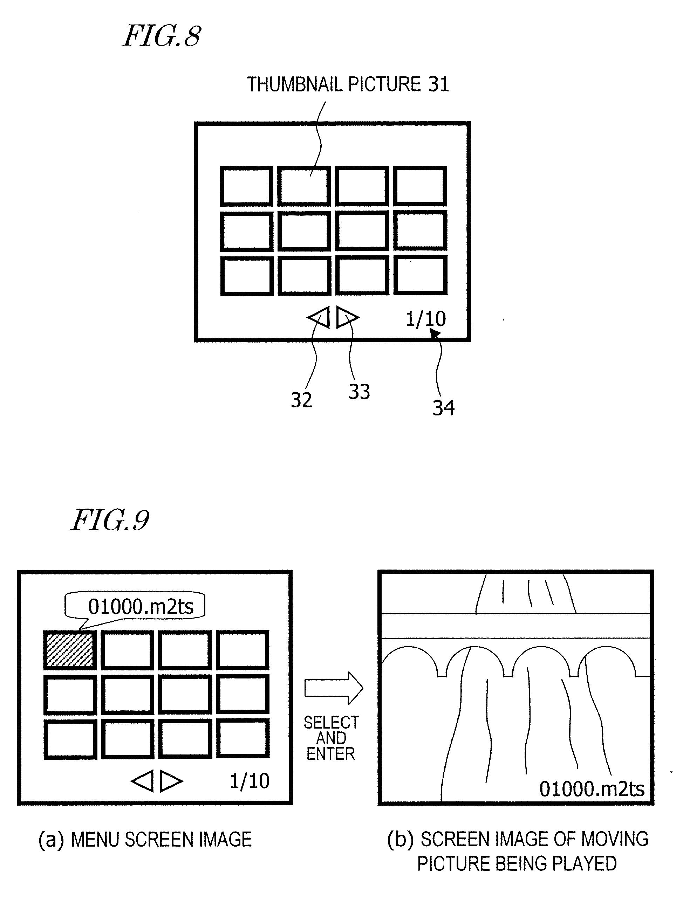

FIG. **8** shows an exemplary title menu screen image shown according to the Java program. Thumbnail pictures (including the thumbnail picture **31),** which are arranged in four columns and three rows, are drawn over the background image. Each of these thumbnail pictures is associated with one of the play list files (and one of the moving picture stream files). Furthermore, backward and forward page turning buttons **32** and **33** are shown at the center of the bottom of the screen. In addition, page number information **34** showing the current page number and the total number of pages is also shown.

As can be seen from FIG. **8****,** it can be said that this image is showing a list of contents with thumbnail pictures. Optionally, a list with no thumbnail pictures may also be shown. Even if a list covering multiple pages is shown but if no thumbnail pictures are shown, the user has to turn pages a smaller number of times.

Optionally, the player may store a program for showing only a list in its memory. If the thumbnail data file **22** stored on the optical disc **141** is referred to when the program is executed, the player does not have to generate thumbnail pictures by itself from the data streams. As a result, the list can be shown quickly and easily.

Portion **(a)** of FIG. **9** shows a title menu screen image that is shown by executing the Java program, while portion **(b)** of FIG. **9** shows an exemplary screen image of the moving picture that is associated with the thumbnail picture selected.

Suppose the user has selected a thumbnail picture associated with the play list 01000.mpls and entered his or her selection with a button pressed on the camcorder **10** or on its remote controller. In that case, the CPU **181** refers to the thumbnail management file **21** and starts playing back a moving picture stream 01000.m2ts that is associated with that thumbnail picture. When the playback of that moving picture stream ends, a title menu will be shown again.

Optionally, in addition to, or instead of, presenting those thumbnail pictures, the file names of the files that store the respective moving picture streams, the dates and times when those files were created, or arbitrary titles that were entered by the user may be shown.

According to this preferred embodiment, thumbnail data and a program for showing a title menu using the thumbnail data are written by the recorder on a storage medium, thereby saving the time to make and write a title menu that has been needed for a conventional recorder every time the storage medium is removed from it. As a result, the processing load on the recorder can be lightened and the processing time it takes to remove the storage medium can be shortened significantly. On top of that, the user no longer needs to determine whether or not to make a title menu or wait until one is completed, thus feeling much less uncomfortable. A player, loaded with that storage medium, searches the storage medium for moving picture streams that are stored there and presents them in association with their thumbnail pictures. That is why each and every moving picture stream that has been recorded up to that point in time can be shown without fail.

The foregoing description is on the supposition that the player can quickly process the Java program for showing a title menu. However, some players could not process the Java program quickly enough.

Thus, considering that the playback operation could be performed by a player of the latter type at a relatively low processing rate, the CPU **181** of the recorder (such as the camcorder **10)** may transform the title menu that is written as the Java program into a title menu that has been subjected to video compression processing on a picture by picture basis and then write the transformed title menu data on the optical disc **141.**

The list image based on such transformed title menu data is also shown as shown in FIG. **8****.** Also, if such a list image is shown, any desired moving picture can be played back by selecting its associated thumbnail picture as shown in FIG. **9****.** For example, in movie DVD-ROMs currently on the market, any chapter may be selected using thumbnail pictures (or videos). If the transformed title menu data is adopted, the same functions as those of the existent menu are realized and the operation of the conventional player is guaranteed.

In the foregoing description, a number of thumbnail data are stored in the same thumbnail data file. Alternatively, those thumbnail data may be stored in their respective thumbnail data files. Also, in the preferred embodiment described above, the thumbnail data file and the thumbnail management file are provided separately from the titleMenu.jar file. However, the thumbnail data file and the thumbnail management file may be included in the titleMenu.jar file. The same statement applies to even a situation where different thumbnail data files are recorded for respective moving picture streams.

Furthermore, in the preferred embodiment described above, the optical disc **141** that stores a data stream and other types of data thereon is supposed to be removable. Alternatively, a non-removable medium such as an HDD built in a recorder may also be used. In that case, however, the recorder should be connected to a network. Then, a player that is also connected to the same network will refer to the Java program to draw a title menu and the player will execute that program. The player may search the HDD, built in the recorder, for moving picture streams and may show available moving picture streams as thumbnails.

In the preferred embodiments described above, the storage medium is supposed to be an optical disc. However, this is just an example. Alternatively, a semiconductor memory such as a memory card, a flash memory, a FeRAM or an MRAM may also be used. Also, the optical disc may be a DVD-RAM, an MO, a DVD-R, a DVD-RW, a DVD+RW, a DVD+R, a CD-R, a CD-RW, a BD-RE, a BD-R or an HD-DVD.

The system control section **180** can perform the functions that have been described herein by executing a computer program that is stored in a program ROM such as the EEPROM **166.**

The respective functional blocks such as those shown in FIG. **2****,** for example, are typically implemented as a semiconductor LSI (large-scale integrated circuit) chip. These functional blocks may be implemented as respective chips or may also be integrated together into a single chip either fully or just partially.

In FIG. **2****,** for example, the encoder **170,** the image generating section **172,** the menu screen image generating section **173** and the system control section **180** are shown as mutually different functional blocks. However, these blocks may be implemented either as mutually different computer chips or as physically the same computer chip. Optionally, the functions of the system control section **180,** the encoder **170,** the decoder **171,** the image generating section **172** and the menu screen image generating section **173** may be integrated together into a single chip circuit. However, only the memory that stores the data to be encoded or decoded may be excluded from the blocks to be integrated together.

It should be noted that the "LSI" mentioned above is sometimes called an IC, a system LSI, a super LSI or an ultra LSI depending on the number of devices that are integrated together per unit area. The integrated circuit does not have to be an LSI but may also be implemented as a dedicated circuit or a general-purpose processor. Optionally, after an LSI has been fabricated, a programmable FPGA (field programmable gate array) or a reconfigurable processor in which the connection or setting of circuit cells inside the LSI are changeable may be adopted.

As another possibility, a novel integrated circuit technology to replace LSIs might be developed in the near future as a result of advancement of the semiconductor technology or any other related technology. In that case, the functional blocks could be integrated together by that novel technology. For example, the functional blocks could be integrated together as bio elements by utilizing some biotechnology.

Also, in the preferred embodiments described above, the data stream is supposed to be a transport stream in which an arrival time stamp is added to each transport packet. Alternatively, the data stream may also be any other bit stream such as a program stream, a PES stream, a QuickTime stream, an MP4 stream, an AVI stream, an ASF stream or a Motion JPEG stream.

Also, the video is supposed to be represented by an MPEG-2 video stream but may also be an MPEG-4 video stream or an MPEG-4 AVC stream (H.264 stream). Likewise, the audio may also be a linear PCM audio stream or an AC-3 stream. Furthermore, not just video and audio but also other types of multimedia information (such as graphic information and character information) may be included as well.

Furthermore, any video compression code such as MPEG-2 Video, MPEG-4 AVC, MPEG-4 Visual, or VC-1 may be adopted for the moving picture stream as long as the player can decode that code.

Also, in the preferred embodiment described above, a single transport stream is supposed to be stored in a single data stream file. Alternatively, a plurality of transport streams may be stored in a single data stream file.

Furthermore, in the preferred embodiment described above, the Java program to draw a title menu is supposed to be recorded when the optical disc is inserted. However, the Java program may also be recorded either when formatting of the optical disc is done or at any point in time specified by the user.

Furthermore, in the foregoing description, the camcorder or the recorder that records the moving picture stream is supposed to record the Java program, too, to show the title menu. Alternatively, any recorder, camcorder or personal computer, other than the device that records the moving picture stream on the optical disc, may record the Java program only. Likewise, any other device may write the title menu data, too.

In the foregoing description of preferred embodiments, the title menus are supposed to be relatively simple ones such as those shown in FIGS. **8** and **9****.** Optionally, if a Java program using graphic data or moving picture data that has been stored in advance on a ROM for an AV data processor is recorded on the optical disc, a more unique title menu of higher quality may also be created.

Also, in the foregoing description, the player is supposed to be always ready to play a class library compliant with the BD-ROM standard and a class defined by the BD-ROM standard is supposed to be used as the Java program. Alternatively, a GUI library such as Swing, which is implemented on PCs, may also be used as long as the player is compatible with such a library. Optionally, a class library that can be accessed over the Internet and that is also defined by the BD-ROM standard or a comparable module program may be usable separately.

Furthermore, in the foregoing description, the title menu is supposed to be shown by getting the Java program executed by the player. However, as long as the program is defined to perform the same function, the program may also be written in the XML language or the XHTML language, for example.

In the preferred embodiment described above, if the Java program for producing the title menu is stored on the disc, the menu screen image generating section **173** is supposed to generate the title menu. However, even if the Java program has been recorded, the appliance may generate and show a unique title menu in its own form without reference to that program. Then, the menu screen image can be generated more easily. As to whether or not to generate such a title menu in the appliance's own form, the appliance may determine by itself based on whether the Java program has been recorded or not.

It should be noted that if playback compatibility of DVD-Rs and DVD-RWs with a DVD-ROM drive should be respected, then the total amount of data stored on a DVD-R or a DVD-RW needs to be at least equal to 1 GB. Therefore, if the total amount of data were less than 1 GB, processing of adding padding data should be carried out during the finalize processing to increase the total amount of data to 1 GB or more. That is why even if the present invention is applied, time for getting this processing done should be taken into account.

However, if only playback compatibility (affinity) with a recordable DVD drive should be respected without paying attention to the playback compatibility with a DVD-ROM drive, there is no need to consider the processing of adding the padding data. Also, since no finalize processing is needed for DVD-RAMs and SD cards, there is no need to take the time to get that processing done into account. The same goes for BD-RE discs and BD-R discs, too.

Furthermore, in the preferred embodiment described above, a thumbnail file is supposed to be generated and stored. However, the thumbnail file does not always have to be stored. Alternatively, when a title menu is generated and shown, one frame or one field of the moving picture stream may be extracted, reduced in size, and then used as a thumbnail picture. In that case, however, it should be noted that some delay would be inevitable before the presentation ends.

### INDUSTRIAL APPLICABILITY

If the data processor, data processing method or data processing program of the present invention is adopted, there is no need to prepare a title menu that has had to be prepared when the user is going to view and listen to a content using a conventional player, recorder or any other appliance. Thus, the time for getting the title menu generating processing done, which has had to be taken into account in recording a content, can be saved. That is why it would be very effective to apply this technique to a content recorder such as an optical disc camcorder or an optical disc recorder.

## Claims

1. A recording apparatus comprising:
a memory that stores thereon a computer-readable computer program being defined so as to make a computer perform processing of searching a storage medium for a data stream representing a content, processing of displaying, on a menu, content information about the data stream that has been found as a result of the search, and processing of making the data stream selectable by using the content information; and
a recording section for recording at least one data stream on a given storage medium,
wherein the recording section records a program, which is stored in the memory, on the given storage medium.

2. The recording apparatus of claim 1, wherein the program is read by an appliance, which is loaded with the given storage medium, and makes a computer of the appliance perform the processing.

3. The recording apparatus of claim 2, wherein the program makes the computer of the appliance perform the processing of searching the given storage medium for the data stream.

4. The recording apparatus of claim 3, further comprising an image generating section for generating a representative picture representing the at least one data stream,
wherein the recording section writes data about the representative picture as the content information on the given storage medium.

5. The recording apparatus of claim 4, wherein the program makes the computer of the appliance perform the processing of displaying the data about the representative picture on the menu.

6. The recording apparatus of claim 4, wherein the recording section further writes a management file, in which the data stream and the data about the representative picture are associated with each other, on the given storage medium.

7. The recording apparatus of claim 6, wherein if the at least one data stream includes a plurality of data streams,
the recording section writes not only a plurality of stream files, each of which stores an associated one of the data streams, but also a single data file, which stores data about the respective representative pictures, on the given storage medium, and further writes a management file, in which respective file names of the stream files and data locations of the respective representative pictures in the single data file are associated with each other, on the given storage medium.

8. The recording apparatus of claim 3, wherein the recording section writes character information, identifying the at least one data stream, as the content information on the given storage medium.

9. The recording apparatus of claim 8, wherein the recording section writes character information, representing at least one of the content's title and recording time, on the given storage medium.

10. The recording apparatus of claim 8, wherein the program makes the computer of the appliance perform the processing of displaying the character information on the menu.

11. The recording apparatus of claim 1, wherein the recording section records the program on the given storage medium before writing the at least one data stream.

12. The recording apparatus of claim 11, wherein if the at least one data stream includes a plurality of data streams,
the recording section records the program on the given storage medium before writing the last one of the data streams.

13. A recording apparatus comprising:
a memory that stores thereon a computer-readable computer program being defined so as to make a computer perform processing of searching a storage medium for a data stream representing a content, processing of displaying, on a menu, content information about the data stream that has been found as a result of the search, and processing of making the data stream selectable by using the content information; and
a recording section having the ability to write data on a given storage medium,
wherein the recording section records a program, which is stored in the memory, on the given storage medium.

14. A playback apparatus for playing back a content that is stored on a storage medium, on which a data stream representing the content, content information about the data stream, and a computer-readable computer program have been written, the playback apparatus comprising
a playback section for reading the computer program, the content information and the data stream from the storage medium, and
a processor with the ability to execute the computer program,
wherein by executing the computer program, the processor searches the storage medium for a data stream, displays, on a menu, the content information about the data stream that has been found as a result of the search, and accepts selection of the data stream based on the content information.
